# EUROPEAN PATENT APPLICATION

(11) **EP 4 654 219 A1**
(43) Date of publication of application: **26.11.2025**
(21) Application number: 23901750.2
(22) Date of filing: 20.10.2023
(51) Int. Cl.: G21F 9/30, C03B 5/00

(54) **LIQUID RADIOACTIVE WASTE INPUT SYSTEM**

(30) Priority: 16.01.2023 KR 20230006209
(71) Applicant: Korea Hydro & Nuclear Power Co., Ltd, Gyeongju-si, Gyeongsangbuk-do 38120 (KR)
(72) Inventor: HWANG, Seok Ju, Daejeon 34101 (KR); HWANG, Young Hwan, Daejeon 34101 (KR); LEE, Mi Hyun, Daejeon 34101 (KR); KIM, Cheon Woo, Daejeon 34101 (KR)
(74) Representative: Glawe, Delfs, Moll
(86) International application number: PCT/KR2023/016366
(87) International publication number: WO 2024/154899

(57) **Abstract**

A liquid radioactive waste injection system for injecting liquid radioactive waste into a vitrification melter that vitrifies radioactive waste is disclosed. The liquid radioactive waste injection system, which injects liquid radioactive waste into the vitrification melter that vitrifies radioactive waste, may include: a waste storage tank storing the liquid radioactive waste; and a waste injection device receiving the liquid radioactive waste from the waste storage tank and injecting the received liquid radioactive waste into the vitrification melter.

## Description

### [TECHNICAL FIELD]

The present invention relates to a liquid radioactive waste injection system for injecting liquid radioactive waste into a vitrification melter that vitrifies radioactive waste.

### [BACKGROUND ART]

Handling, storing, and managing harmful wastes, especially radioactive waste, in a more stable manner is a very important issue. One of the methods for processing and storing waste is vitrification, which uses glass to treat waste. This process involves immobilizing radioactive waste, sludge, contaminated soil, or industrial waste in a glass structure to prevent it from leaching into the surrounding environment, thereby permanently isolating it.

Generally, a waste vitrification device melts a glass-forming agent and waste inside a melter to vitrify the waste. The volatile components within the waste are exhausted to an off-gas treatment process, and toxic substances such as radioactive nuclides and heavy metals become part of the glass network structure. Heat is applied to provide a residence time until a homogeneous molten glass mixture is formed, after which the molten glass is discharged to create a vitrified waste form.

Melters vary in heating methods. Among the melters, the cold crucible induction melter (CCIM) include, as its main components, a cylindrical melting chamber where electrical insulators are inserted between multiple metal sectors for circulating cooling water, and a high-frequency induction coil provided on the outside of the melting chamber. The high-frequency current applied to the induction coil melts the materials (e.g., waste and glass) within the melting chamber.

When radioactive waste is fed into the melter, it needs to be supplied uniformly. Otherwise, the melting of the radioactive waste within the melter can become uneven.

### [TECHNICAL PROBLEMS]

Meanwhile, converting initially dried solid or sludge radioactive waste into a liquid state by mixing it with additional water and then stably and quantitatively injecting it into a vitrification melter at temperatures above 1,000°C is an important operational technique in radioactive waste management. In particular, the various and large quantities of secondary waste generated during the treatment of radioactive contaminated water from the cooling process of the damaged reactors at Fukushima Daiichi Nuclear Power Plant in Japan are currently temporarily stored in metal containers in sludge form. Vitrification technology is gaining the most interest as a method for safely processing such waste.

The problem that the present invention aims to solve is to provide a liquid radioactive waste injection system that converts sludge and other similar materials into liquid radioactive waste and injects it into a vitrification melter.

The objectives of the present invention are not limited to the aforementioned issues, and other unstated objectives will become apparent to those skilled in the art from the following descriptions.

### [TECHNICAL SOLUTIONS]

A liquid radioactive waste injection system according to an embodiment of the present invention for achieving the above objective injects liquid radioactive waste into a vitrification melter that vitrifies radioactive waste, and includes: a waste storage tank storing the liquid radioactive waste; and a waste injection device receiving the liquid radioactive waste from the waste storage tank and injecting the received liquid radioactive waste into the vitrification melter.

The waste storage tank may include an agitator, which mixes the liquid radioactive waste.

The waste injection device may include an injection pipe, which injects the liquid radioactive waste into the vitrification melter, a cooling pipe, which contacts the injection pipe and through which cooling water flows to cool the injection pipe, and a housing, which encloses and accommodates the injection pipe and the cooling pipe.

The cooling pipe may include an inlet for the inflow of the cooling water on one side and an outlet for the outflow of the cooling water on the other side.

The waste injection device may further include a connecting pipe, which connects the inlet and the outlet, and the connecting pipe and the cooling pipe may form a closed-loop system that circulates the cooling water.

The cooling water may be drained to the outside through the outlet.

The injection pipe may be positioned at a center of the housing.

The liquid radioactive waste injection system may further include a peristaltic tube pump, which supplies the liquid radioactive waste from the waste storage tank to the waste injection device.

If the vitrification melter includes a solid radioactive waste supply pipe, the waste injection device may be mounted in the supply pipe and may inject the liquid radioactive waste into the vitrification melter through the supply pipe.

Specific details of other embodiments are included in the detailed description and drawings.

### [ADVANTAGEOUS EFFECTS]

According to the present invention, a liquid radioactive waste injection system capable of stably supplying liquid radioactive waste to a vitrification melter can be provided.

### [BRIEF DESCRIPTION OF DRAWINGS]

FIG. 1 illustrates a liquid radioactive waste injection system according to an embodiment of the present invention.
FIGS. 2 through 4 illustrate a waste injection device of the liquid radioactive waste injection system.

### [BEST MODE FOR CARRYING OUT THE INVENTION]

The present invention provides a liquid radioactive waste injection system, which injects liquid radioactive waste into a vitrification melter that vitrifies radioactive waste, and the liquid radioactive waste injection system includes: a waste storage tank storing the liquid radioactive waste; and a waste injection device receiving the liquid radioactive waste from the waste storage tank and injecting the received liquid radioactive waste into the vitrification melter.

### [MODES FOR CARRYING OUT THE INVENTION]

Preferred embodiments of the present invention will hereinafter be described in detail with reference to the accompanying drawings. The advantages and features of the present invention, and methods for achieving them, will become apparent with reference to the embodiments described below in detail along with the accompanying drawings. However, the present invention is not limited to the embodiments disclosed herein but can be implemented in various other forms. These embodiments are provided to make the disclosure of the present invention thorough and to fully convey the scope of the invention to those skilled in the art, and the present invention is defined only by the scope of the claims. Throughout the specification, the same reference numerals refer to the same components.

Hereinafter, a liquid radioactive waste injection system according to an embodiment of the present invention will be described.

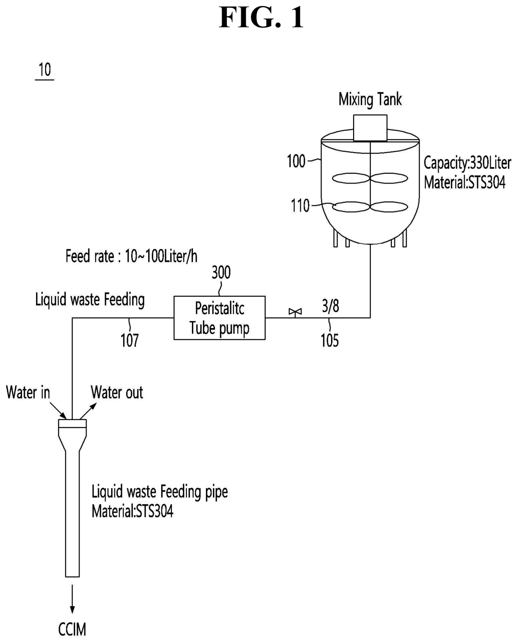

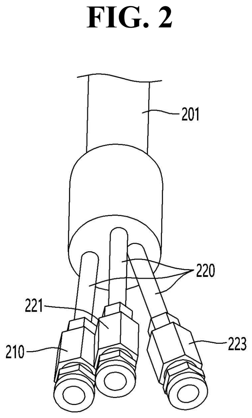

FIG. 1 illustrates a liquid radioactive waste injection system according to an embodiment of the present invention, and FIGS. 2 through 4 illustrate a waste injection device of the liquid radioactive waste injection system.

Referring to FIG. 1, a liquid radioactive waste injection system 10 according to an embodiment of the present invention, which injects liquid radioactive waste into a vitrification melter that vitrifies radioactive waste, may include a waste storage tank 100 that stores the liquid radioactive waste, and a waste injection device 200 that receives the liquid radioactive waste from the waste storage tank 100 and injects the received liquid radioactive waste into the vitrification melter.

A radioactive waste vitrification facility, which is an installation that processes radioactive waste more safely, can drastically reduce the volume of intermediate- and low-level radioactive waste and minimize the leakage of radioactive substances into the surrounding environment under any circumstances, thereby significantly improving the safety of radioactive waste disposal.

The radioactive waste vitrification facility combines radioactive waste with a glass structure to fundamentally block the leakage of radioactive substances into the environment and can innovatively reduce the volume of radioactive waste. Vitrification technology can reduce the initial volume of all combustible and non-combustible intermediate- and low-level radioactive waste generated from nuclear power plants to less than 1/20 of the original volume. This not only ensures the safe disposal of radioactive waste but also greatly contributes to the stable advancement of disposal projects for the construction of management facilities.

Generally, the radioactive waste vitrification facility may vitrify radioactive waste through the following process.

Glass raw materials are inserted into an induction heating vitrification melter and are melted using heat induced by an electromagnetic field. Once the glass melt reaches a temperature of approximately 1100°C, finely crushed radioactive waste stored in a radioactive waste storage unit is supplied into the glass melt via a radioactive waste supply device. The waste decomposes on the surface of the glass melt, and the radioactive substances form a strong bond with the glass components. Combustible waste that can be processed in the induction heating vitrification melter includes items such as clothing, gloves, shoes, and tissues used by workers, as well as low-radioactive ion exchange resins used for water purification at nuclear power plants.

Radioactive nuclides incorporated into a glass structure are prevented from escaping under any environmental conditions. The robustness of the bond between the glass structure and the radioactive nuclides is verified through internationally recognized leaching tests.

Meanwhile, the waste storage tank 100, which contains radioactive waste, may accommodate liquid radioactive waste in the liquid radioactive waste injection system 10.

The waste storage tank 100 may include an agitator 110, which ensures that the contained liquid radioactive waste is stirred and mixed. The agitator 110 may consist of a shaft that receives power and blades that perform stirring. That is, when the shaft is rotated by external power, the blades attached to the shaft also rotate, mixing the liquid radioactive waste within the waste storage tank 110. As a result, the waste included in the liquid radioactive waste may be evenly dispersed in the liquid state within the waste storage tank 100. The liquid radioactive waste stored in the waste storage tank 100 may be supplied to the waste injection device 200 via supply pipes 105 and 107 and a peristaltic tube pump 300.

Referring to FIGS. 1 through 3, the liquid radioactive waste injection system 10 may include the waste injection device 200.

The waste injection device 200 may inject liquid radioactive waste supplied from the waste storage tank 100 into the melter. To this end, the waste injection device 200 may include an injection pipe 210 which injects the liquid radioactive waste into the vitrification melter, a cooling pipe 220 which contacts the injection pipe 210 and through which cooling water flows to cool the injection pipe 210, and a housing 201 which encloses and accommodates the injection pipe 210 and the cooling pipe 220.

The injection pipe 210, the cooling pipe 220, and the housing 201 may be formed of a corrosion-resistant material to prevent corrosion by radioactive waste or other wastes and by exposure to the atmosphere. Preferably, the injection pipe 210, the cooling pipe 220, and the housing 201 may be formed of stainless steel.

The injection pipe 210 may function as a flow path through which liquid radioactive waste moves. One end of the injection pipe 210 is connected to the waste storage tank 100 and the supply pipes 105 and 107, and the other end of the injection pipe 210 may be connected to the vitrification melter.

When waste is supplied from the waste storage tank 100, it is delivered to the peristaltic tube pump 300 via the first supply pipe 105. The liquid radioactive waste injection system 10 may include the peristaltic tube pump 300, and the peristaltic tube pump 300 may quantitatively supply the waste to the waste injection device 200. The waste supplied from the peristaltic tube pump 300 is delivered to the injection pipe 210 of the waste injection device 200 via the second supply pipe 107. The injection pipe 210 may receive the waste and inject it into the melter.

Meanwhile, the temperature within the injection pipe 210 of the waste injection device 200 may rise to 600 to 1,000°C due to the delivered waste. Since overheating of the injection pipe 210 may cause deformation of the waste injection device 200 or the waste, it is necessary to cool the interior and exterior of the injection pipe 210. For this, the waste injection device 200 may include the cooling pipe 220.

The cooling pipe 220 may be arranged to contact the injection pipe 210 within the housing 201, allowing the cooling pipe 220 to supply cooling to the injection pipe 210. As the cooling pipe 220 is arranged in contact with the injection pipe 210, it can transfer cooling to the injection pipe 210, thereby cooling the injection pipe 210.

Cooling water may flow through the cooling pipe 220 to cool the injection pipe 210. To facilitate this, the cooling pipe 220 may include an inlet 221 for the inflow of cooling water on one side and an outlet 223 for the outflow of cooling water on the other side. The cooling water entering through the inlet 221 moves along an inlet pipe 225, exchanges heat with the injection pipe 210, and cools the injection pipe 210.

Additionally, the cooling water moves along a discharge pipe 226 connected to the inlet pipe 225, exchanges heat with the injection pipe 210, and is discharged to the outside of the cooling pipe 220 through the outlet 223.

For example, cooling water at 100°C and 5 bar pressure may be introduced through the inlet 221, pass through the cooling pipe 220, exchange heat with the injection pipe 210, and cool the injection pipe 210. After exchanging heat with the injection pipe 210, the cooling water may be discharged to the outside of the cooling pipe 220 through the outlet 223.

The cooling water discharged to the outside of the cooling pipe 220 through the outlet 223 may be drained out of the waste injection device 200. In other words, the cooling water is not reused but is drained and discharged to the outside of the waste injection device 200. In this case, new cooling water needs to be continuously supplied from the outside.

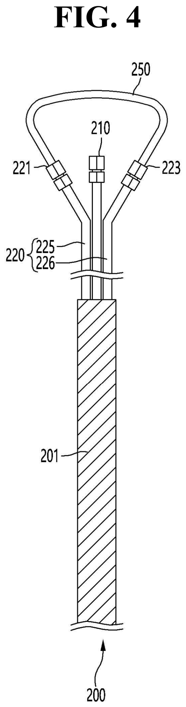

Alternatively, the cooling water may be reused. Referring to FIG. 4, the waste injection device 200 may further include a connecting pipe 250 that connects the inlet 221 and the outlet 223. As a result, the connecting pipe 250 and the cooling pipe 220 may form a closed-loop system that circulates the cooling water.

In this case, a heat exchanger (not illustrated), which includes a cooling cycle to cool the cooling water that has absorbed heat from the injection pipe 210, may be located in the flow path of the connecting pipe 250. Through the heat exchanger on the connecting pipe 250, the cooling water may be adjusted to the state necessary for cooling the injection pipe 210. For example, the cooling water passing through the heat exchanger may be adjusted to a state of 5 bar and 100°C as needed for cooling the injection pipe 210.

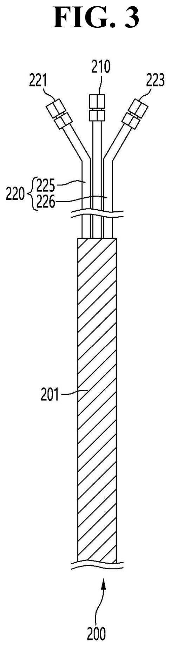

Meanwhile, referring to FIGS. 3 and 4, the injection pipe 210 may be positioned at the center of the housing 201. As the injection pipe 210 is positioned at the center of the housing 201, it can smoothly determine and manage the connection position when connecting with the melter.

The liquid radioactive waste injection system 10 may be used by being connected and mounted in the vitrification melter. Specifically, the waste injection device 200 of the liquid radioactive waste injection system 10 may be mounted in the melter to inject liquid radioactive waste into the melter.

For example, if the vitrification melter includes a solid radioactive waste supply pipe (not illustrated), the waste injection device 200 may be mounted in the solid radioactive waste supply pipe, and liquid radioactive waste may be injected into the vitrification melter through the supply pipe. In other words, the vitrification melter may receive liquid radioactive waste through the liquid radioactive waste injection system 10 without installing a separate liquid supply pipe. Therefore, according to the present invention, liquid radioactive waste can be processed using the existing structure of the melter.

Although the embodiments of the present invention have been described above with reference to the accompanying drawings, those skilled in the art will understand that the present invention can be implemented in other specific forms without changing its technical spirit or essential features. Therefore, the embodiments described above should be understood as illustrative rather than restrictive in all respects.

## Claims

1. A liquid radioactive waste injection system for injecting liquid radioactive waste into a vitrification melter that vitrifies radioactive waste, comprising:
a waste storage tank storing the liquid radioactive waste; and
a waste injection device receiving the liquid radioactive waste from the waste storage tank and injecting the received liquid radioactive waste into the vitrification melter.

2. The liquid radioactive waste injection system of claim 1, wherein the waste storage tank includes an agitator, which mixes the liquid radioactive waste.

3. The liquid radioactive waste injection system of claim 1, wherein the waste injection device includes an injection pipe, which injects the liquid radioactive waste into the vitrification melter, a cooling pipe, which contacts the injection pipe and through which cooling water flows to cool the injection pipe, and a housing, which encloses and accommodates the injection pipe and the cooling pipe.

4. The liquid radioactive waste injection system of claim 3, wherein the cooling pipe includes an inlet for the inflow of the cooling water on one side and an outlet for the outflow of the cooling water on the other side.

5. The liquid radioactive waste injection system of claim 4, wherein
the waste injection device further includes a connecting pipe, which connects the inlet and the outlet, and
the connecting pipe and the cooling pipe form a closed-loop system that circulates the cooling water.

6. The liquid radioactive waste injection system of claim 4, wherein the cooling water is drained to the outside through the outlet.

7. The liquid radioactive waste injection system of claim 3, wherein the injection pipe is positioned at a center of the housing.

8. The liquid radioactive waste injection system of claim 1, wherein if the vitrification melter includes a solid radioactive waste supply pipe, the waste injection device is mounted in the supply pipe and injects the liquid radioactive waste into the vitrification melter through the supply pipe.
